# EUROPEAN PATENT SPECIFICATION

(11) **EP 2 613 662 B1**
(45) Date of publication and mention of the grant of the patent: **22.08.2018**
(21) Application number: 11764861.8
(22) Date of filing: 06.09.2011
(51) Int. Cl.: A45D 31/00, B29C 41/08, A45D 29/00

(54) **METHOD OF MANUFACTURING PERSONALIZED COSMETIC ARTICLES, ESPECIALLY FALSE NAILS, AND ARTICLES THUS PRODUCED**
VERFAHREN ZUR HERSTELLUNG VON PERSONALISIERTEN KOSMETISCHEN ARTIKELN, IM BESONDEREN FALSCHE NÄGEL, UND DAMIT HERGESTELLTE ARTIKEL
PROCÉDÉ DE FABRICATION D'ARTICLES COSMÉTIQUES PERSONNALISÉS, EN PARTICULIER DE FAUX ONGLES, ET ARTICLES AINSI FABRIQUÉS

(30) Priority: 08.10.2010 US 391304 P; 06.09.2010 FR 1057077
(43) Date of publication of application: 17.07.2013
(73) Proprietor: L'Oréal, 75008 Paris (FR)
(72) Inventor: SAMAIN, Henri, F-91570 Bievres (FR); DE LAFORCADE, Vincent, F-78120 Rambouillet (FR); GIRON, Franck, F-77164 Ferrieres En Brie (FR)
(74) Representative: Nony
(86) International application number: PCT/IB2011/053886
(87) International publication number: WO 2012/032463

(56) References cited:
- WO-A1-98/14143
- WO-A1-2009/079463
- JP-A- 2010 131 222
- US-A- 4 974 610

## Description

The present invention relates to the production of false nails.

Women want to apply makeup to their nails to give them a more attractive coloured appearance and/or to make them larger, longer or more uniform. They also want to make them up to modify their superficial appearance, to make them more shiny or to create decorative or expressive patterns on their nails. They also seek to reinforce their nails to protect them from knocks, scratches or liquids.

Techniques available at the current time to reach these objectives are, depending on the circumstances, relatively effective.

Varnishes are good for providing a coloured and/or shiny appearance. However, they do not enable the nails to be lengthened or made more uniform and in addition they are relatively brittle.

To a certain extent, varnishes make it possible to form patterns. However, these patterns must be produced by a skilled person and the lifetime of the varnish limits the benefit relative to the required investment.

The conventional technique used to apply false nails, which consists in applying a base made of a plastic to part of the nail, then pouring a curable resin over the whole, is advantageous because it allows the nails to be lengthened and made uniform.

However, this technique requires a substantial amount of know-how and takes a long time to implement, normally more than 30 minutes. The care that follows application consumes a non-negligible amount of time because, as and when the nail grows, it is necessary to touch up the curable resin and pour a new layer thereof.

A major drawback of this technique is that the false nail thus obtained cannot be removed at any moment. This limits the popularity of the technique because many women would like decorated and/or lengthened nails for a limited period of time only. Knowing that they cannot easily remove their false nails they prefer not to use them at all, and when they do use them they prefer to limit the length and amount of decoration.

Another substantial drawback is that the nail suffers when it is not exposed to the open air; if it remains covered by the resin for a prolonged period of time it may soften or develop infections.

The conventionally-used technique does not allow patterns to be easily produced, even if varnish stays longer on a false nail and makes the investment more beneficial.

Moreover, patches have appeared recently which are formed of flexible adhesive strips which conform, when pressed, to the roundness of the nail. A major drawback of patches is that they can be presented to the users only in predefined shapes that do not correspond to the exact outline of the nail. Thus it is necessary to cut the false nail, which it is possible to do only once the patch has been applied (bonded). It has been observed that many people find this cutting difficult to carry out.

Patches offer a shiny and coloured look, often an improvement on that of varnish, and their wear property can be good. However, as they follow the surface of the nails closely, it is possible to see imperfections on the surface of the nail.

In addition, patches cannot be used to lengthen the nails because if the patch forms an overhang it very quickly folds up when knocked.

In theory patches can be used to produce patterns. However, this technique is limited because cutting encroaches on the pattern and the latter is spoilt. For example, if it is desired to fit a patch having a tricolour flag pattern, the pattern will possibly be too small or too large widthways depending on the size of the nail to which it is to be fitted. The problem is even worse for lengthwise patterns because, depending on the length of the nail, all or part of the pattern may be removed or made to appear excessively large.

Certain methods have been described for producing false nails or patches personalized to the size of the nails. These methods comprise taking measurements and producing items corresponding precisely to the size of the nail.

Patent EP 0 577 515 describes a 3D acquisition and the cutting-out of a false nail.

Application US 7 123 983 describes a system that measures the 3D shape of the nail without touching it and then orders a tool to produce false nails. It is possible to adjust the length and the style of the false nail.

US 7 526 416 describes a method in which a comparison is made between a 3D file and pre-existing false nails.

WO 2009/079463 mentions several types of moulding processes for manufacturing false nails, including the use of stereolithography. This method does not provide satisfactory results because it is difficult to make very thin items in particular having a thickness smaller than 0.5 mm. Thus, the item appears too thick on the nails. In addition, the method limits the choice of materials and a notched rather than smooth surface is obtained, because the item is produced layer by layer.

WO 2005/076992 describes the manufacture of a false nail based on acquisition of the contours of the surface of the nail.

Application EP 0 947 899 describes a method aiming to produce an artificial skin on a prosthetic.

Application JP 20000301778 describes a system for printing onto false nails.

Application JP 2010/131222 describes the moulding of a false nail on a mould obtained by taking an impression of the finger, without taking measurements.

In the field of orthoses for correcting cranial shape, application WO 98/14143 describes the manufacture of an orthosis by taking measurements on the patient's head, manufacture of a mould then application of bands thereto and machining.

There remains a need to benefit from a practical method for producing false nails of all thicknesses, especially smooth and shiny and optionally coloured false nails, compatible with the production of patterns.

More generally, the invention aims to further improve techniques for producing made-to-measure articles designed for application to the human body, and especially techniques for producing false nails.

The articles that the invention seeks to produce are cosmetic articles, with no curative purpose, and are therefore different, *inter alia,* from orthoses intended to modify the shape of the cranium.

The above objectives are achieved by a method of manufacturing a false nail applied to the human body, according to appended independent claim 1. Preferred methods are defined in the dependent claims.

Thus one subject of the invention, according to one of its aspects, is a method of manufacturing an article to be applied to the human body, especially a finger, comprising the following steps:
- acquiring contours, namely digital acquisition of 3D contour data, from the region on which the article needs to be applied;
- producing a mould using the 3D data and a numerical-control manufacturing machine;
- applying to the mould a coating intended to form the article; and
- at least partially cutting out the coating to form the article.

In the case of false nails, it is the internal surface of the article that makes contact with the mould during manufacture of the article.. The expression "internal surface" is understood to mean the surface of the article which makes contact with the region to be covered by the article.

Manufacture of the article, in the invention, using a mould, rather than directly using a numerical-control machine, is advantageous.

Firstly, the mould produced may have a thick wall and the article produced may have a small thickness, thereby increasing the field of application of the invention and the comfort and/or appearance of the article.

In addition, the invention makes it possible to use materials, in order to produce the article, which would not be compatible with a direct manufacture of the article using a numerical-control machine. For example, it is possible to use, to produce the article, a multilayer sheet, whereas a multi-material article could not easily be produced using stereolithography.

It is also possible to use, to produce the article, materials having a certain porosity to moisture and air, thereby making it possible for the underlying region to breathe, whereas certain materials currently used in stereolithography or 3D printing do not have such permeability to water vapour or air.

The coating may be a material in sheet form when it is brought into contact with the mould, as will be described in more detail below. One or more articles may be produced from one sheet and a single moulding operation.

Another subject of the invention, according to another of its aspects, is an article to be applied to human keratinous materials, especially a false nail, comprising a thermoformed multilayer structure having an internal surface to be applied to said keratinous materials and a visible external surface, the internal surface having a tiered roughness. This roughness is a feature of the mould produced by stereolithography or 3D printing.

The article is preferably rigidly connected to a thermoformed support produced from the same material with optional preformed scoring between the article and the support. Such an article is obtained by the method defined above.

According to one of its aspects, one subject of the invention is a kit comprising:
- an article, especially a false nail, produced using a material in sheet form, and one at least of:
   ∘ an adhesive enabling the article to be attached to human keratinous materials,
   ∘ a cosmetically acceptable solvent, for example an organic solvent, which makes it possible to reduce the adhesive strength of the adhesive in order to debond the article from human keratinous materials, and
   ∘ a composition to be applied to the human keratinous materials intended to receive the article, especially for improving the adhesion of the article.

The article may be produced by implementing the method according to the invention.

The article, the adhesive and/or the solvent and/or the composition may be packaged together in a package, for example a box or a blister pack.

The article may comprise a layer of adhesive used to attach the article to said human keratinous materials and a solvent-porous region that communicates with said layer of adhesive, the solvent making it possible to reduce the adhesive strength of the adhesive.

The porous region may not open onto the visible surface of the article, a mechanical action of cutting or debonding a layer of the article being necessary in order to form an area of access to the porous region allowing migration of the solvent to the adhesive.

The material in sheet form and the solvent may be chosen so that the material in sheet form can be dissolved by the solvent.

The article may exhibit porosity in the form of an assembly of channels and/or pores, connected to one another. Their size is large enough to allow the solvent to migrate over a relatively short time to the adhesive. The migration of the solvent into the material in sheet form may take place by diffusion, or else by permeation, for example by a capillary action mechanism.

According to another aspect, one subject of the invention is an article to be applied to human keratinous materials, especially a false nail, having an internal surface to be applied to said human keratinous materials, said internal surface being covered with a layer of adhesive and coated with a water-soluble powder that protects the layer of adhesive before use.

The article may comprise a thermoformed multilayer structure. It may be produced by implementing the method according to the invention.

### Contour acquisition

The contour acquisition may be carried out by any means that makes it possible to obtain a digital file containing data representing the contours.

For example, the contours are acquired by way of at least two images of the region, taken at different angles, and preferably three images of the region, namely a side view, a front view and a top view. These images may be taken with a camera or digital imaging device.

The contours may even be acquired by projection of a beam of light or by scanning a laser, the contour preferably being acquired using a contactless technology.

Preferably, the contours acquired have a spatial resolution of at least 10 µm.

### Production of the mould and deposition of the coating

The numerical-control machine used to produce the mould may be a stereolithography machine, a 3D printer or a machine tool. The mould may be produced after processing of the 3D data, as explained in more detail below.

### Material used for manufacture

The coating that is deposited in the mould is preferably in sheet form, but in a variant may be deposited by spraying and on drying take the given shape of the mould.

Preferably, when a sheet is used, the latter is thermoformed, the sheet and/or the mould being heated to a temperature that allows the sheet to follow the shape of at least part of the mould relatively closely.

Before the coating is applied, a layer of a non-stick compound, in particular a silicone or a powder such as boron nitride powder, intended to make subsequent removal of the coating easier, may be applied to the mould, for example a non-stick silicone compound.

To press the material in sheet form against the mould, it is possible to use suction, in which case one or more channels connected to a suction source may be produced in the mould during manufacture of the latter.

It is also possible to use, to press the material in sheet form against the mould, a pressurized fluid, for example a pressurized gas, especially hot air.

It is also possible to use a counter-mould that presses the material in sheet form against the mould. The use of a counter-mould may make it possible to provide the external surface of the article with a particular relief, depending on the surface finish of the counter-mould.

After moulding, the article may be detached from the rest of the coating. This detachment may take place while the coating is still hot, for example at a temperature higher than (Tᵢ + T_{f})/2, where Tᵢ is the maximum temperature to which the coating is heated and T_{f} is the ambient temperature, taken to be 20°C.

Preferably a laser is used to cut out the article and detach it from the rest of the coating. The article may also be detached using pressure or by mechanical cutting.

### Processing of the 3D data

The method may comprise a step in which the contour data is processed so as to produce a mould that makes it possible to obtain an article that extends beyond the region the contours of which have been acquired, especially in the case of a false nail, or the shape of which has been modified relative to the acquired contours so as to produce a predefined effect, for example stretching of the skin, filling of wrinkles and/or lifting of an organ.

The mould may thus be provided with an extension intended to form the nail end that extends beyond the finger, this extension intended to form the nail end being computationally generated based on knowledge of the data corresponding to the contours of the region on which the false nail will be applied.

One advantage of using a stereolithography or 3D-printing technique to produce the mould is that the mould may be built up out of layers, giving the external surface thereof a tiered relief and making it possible, when the coating is deposited above, to provide the internal face of this coating with a notched relief. Such a relief leads to a roughness that increases the contact area with an adhesive used to fasten the article to the region to be treated. It is thus easier to use an adhesive that makes debonding easy when the user desires to remove the article. Such a relief may also help the region coated by the article to breathe. Despite the tiered relief on the surface of the mould in contact with the coating, the external surface of the article may be smooth. The mould may thus be produced other than by a machining technique.

When the coating is a sheet that is deposited on the mould, this sheet may have various structures.

Preferably, the material in sheet form has a multilayer structure with at least two at least partially superposed layers. This may make it possible for example to have within the material in sheet form an internal layer more particularly intended to provide the article with its mechanical strength and an external layer intended to provide the article with the desired appearance. This external layer is for example a pigmented, metallized or otherwise decorated layer.

In an exemplary embodiment, the material in sheet form has non-uniform mechanical properties, this possibly being advantageous for example when the article is a false nail, so as to obtain a false nail the rigidity of which is higher at the nail end than in the part superposed on the nail, which is less mechanically stressed.

To obtain a variation in the mechanical properties of the material in sheet form, it is possible to use two superposed materials having respective thicknesses that vary as a function of location on the sheet.

In a particular implementation, it is possible to add, either during the thermoforming or after, elements that provide a relief and/or decorative aspect such as one or more small gems.

### False nail production

The invention is directed towards the production of false nails.

In this case, the method comprises acquiring the contours of the five nails of the two hands, even of the two feet. Next, a plurality of moulds may be produced. Preferably, two moulds are produced, one for each hand. Each mould may comprise a boss the external surface of which substantially corresponds to the contours of the nail and a plate to which these various bosses are connected, this plate making handling of the mould easier.

It is possible to provide the user with false nails that are separated from one another and entirely cut out. The false nails may also be provided as part of a single thermoformed item, each false nail being detached from this item by the user, for example by breaking bridges of material or using a cutting tool.

### Positioning guide

The invention enables a guide for positioning the false nail to be produced via acquisition of the contours not only of the nail itself but also of the phalanx bearing the nail. This may make it possible to mould not only the nail but also an area that makes positioning the false nail on the nail easier during use of the article.

The positioning guide may, if required, serve as a barrier protecting the skin during application of a varnish to the false nail. In this case, it is possible, in a first step, to fix the false nail to the nail while protecting the adjacent skin by virtue of the positioning guide that is left in place. The false nail may in this case advantageously be produced from a transparent or translucent material and the user may apply the varnish of their choice thereto. Next, the user removes the guide that provided a barrier protecting the skin during the application of the varnish and leaves in place the varnish-covered false nail. This may enable a user to apply the varnish very rapidly without fear of coating the skin and without having to clean the latter afterwards.

### Mask

It is possible to acquire the contours of a region, to produce the corresponding mould, and to cut out part of the coating so as to form an article having a window enabling a treatment to be carried out, for example application of a product, while the article masks the region around the window and prevents the product from being applied to this region. The window may correspond to the outline of the nail.

It is possible to produce a mould having the shape of all or part of the hand, so as to produce a glove by spraying into this mould, and then to cut apertures in this glove corresponding exactly to the shape of the nails of this hand. When the user wears the glove it is easy to deposit, through the apertures opening onto the nails, a product, for example a coloured varnish, without running the risk of staining the skin.

### Other applications

The invention applies to the production of false nails. Not in accordance with the invention, the method may also be applied to the production of any non-planar item applied to the human body, the item having a small, substantially constant thickness and requiring low-cost tailoring.

Thus, extending beyond the scope of the invention, the field of application is the entire body and even the production of items to be placed on clothes.

It is possible for example, not in accordance with the invention, to use the method to produce articles intended to be fixed to the eyelid, to modify the shape of the eyes. In this case the contours of the eyelid are acquired to produce the mould.

It is also possible, not in accordance with the invention, to use the method to produce an article that is fixed to the finger tip, and to use this article as an applicator for applying a beauty care product or make up to the skin or skin appendages. The fact that the article is produced with the exact shape of the finger tip makes adhesion of the article to the finger possible without it being necessary to provide an adhesive, adhesion occurring for example via a capillary effect after having wetted the finger. It is also possible to apply a solvent which softens the internal surface of the article.

It is also possible, not in accordance with the invention, to use the method to produce articles intended especially for non-therapeutic applications and intended in particular for cosmetic treatment, for example to mask wrinkles, to produce decorative coatings or to hide marks, to lift sagging regions such as the chin, the breasts, etc, to cover alopecic areas of the scalp, the lips, etc.

### Production of a decoration

The coating used to produce the article may be decorated while it is still in the mould or after detachment from the mould.

Preferably, when a material in sheet form is used the latter is applied to the mould with the decoration already in place on the material in sheet form, thereby possibly making production of the decoration, especially by printing, easier, the material in sheet form being in strip form during the printing or another decoration-forming treatment - for example metallization.

The invention will be better understood on reading the detailed description that follows of exemplary non-limiting implementations thereof, and on examining the appended drawings, in which:
- Figure 1 is a block diagram illustrating an exemplary implementation of the method according to the invention;
- Figure 2 shows, schematically, a system enabling implementation of the method according to the invention;

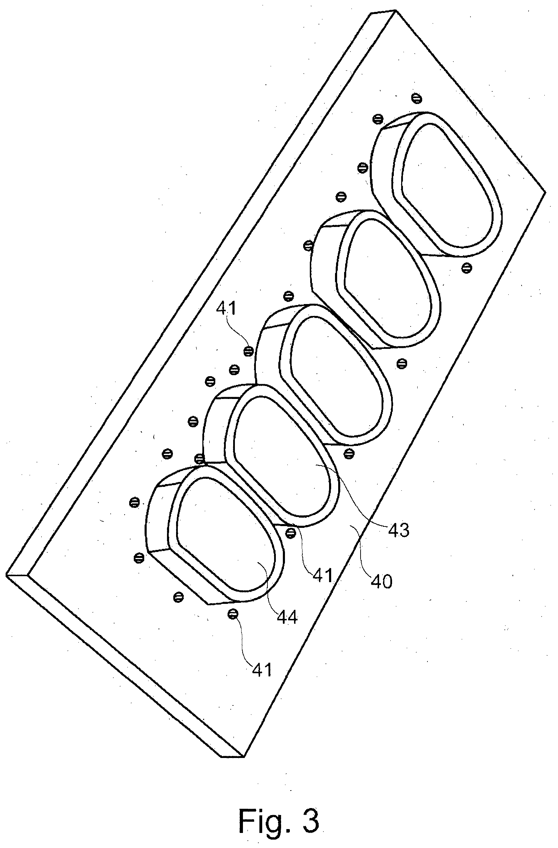

- Figure 3 shows an exemplary mould;
- Figure 4 illustrates the shaping of the material in sheet form;
- Figure 5 shows the material in sheet form after shaping;
- Figure 6 shows the false nails after they have been cut out from the material in sheet form;
- Figure 7 illustrates the application of a false nail to the nail;
- Figure 8 shows an article equipped with a positioning guide on the finger;
- Figure 9 shows an article intended to be used as a mask;
- Figures 10 and 11 show in cross section exemplary structures for the material in sheet form;
- figures 12, 13 and 15 represent, in cross section, articles according to the invention attached with the aid of adhesives to human keratinous materials and illustrate methods for debonding articles, and
- figures 14 and 16 illustrate, in cross section, embodiments of false nails fastened to natural nails.

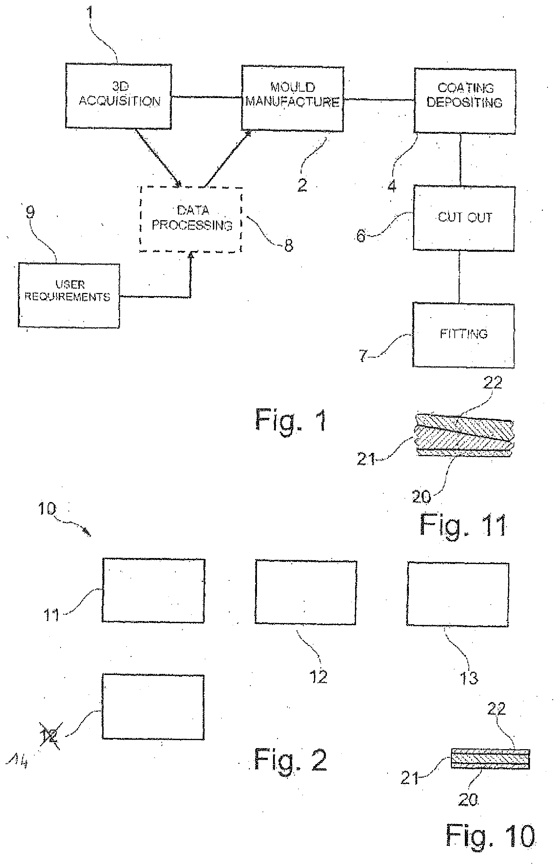

Steps for implementing a method according to the invention will now be described with regard to Figure 1.

The method comprises a step 1 of acquiring 3D data relating to the contours of the region to be treated, i.e. the region intended to receive the article or to be treated with the article in place.

### These 3D data are used to manufacture a mould in step 2.

The manufacture of the mould is preferably carried out by stereolithography or 3D printing, after an optional step 8 of processing the 3D data, so as to correct defects or give the expected shape to the article.

In the case of false-nail manufacture, the processing of the 3D data makes it possible to calculate the contours of the nail end based on the measured contours.

The processing of the 3D data may be carried out depending on the desires of the user, which may be entered in a step 9. This may for example be selection of a type of article to produce, for example the length of the false nails.

The deposition of a coating on the mould, in step 4, may be carried out by applying a material in sheet form to the mould or by spraying the coating onto the mould.

Once the coating has been deposited it may be cut out, in step 6, so as to produce the article or articles to be applied in the desired format.

The cutting-out operation 6 in particular makes it possible to separate the article from the rest of the material deposited on the mould.

Once the article has been cut out the latter may be applied to the region to be treated, for example using a pressure-sensitive adhesive so as to make it possible to easily remove the article.

In a variant, the application may occur before the cutting out, i.e. during the application the article is rigidly connected to a support that is then detached from the article. In this case the article advantageously possesses preformed scoring so as to make detachment from the support easier. The cutting-out step 6 is then only partially implemented.

The method according to the invention may be implemented using a system 10 that may comprise, as illustrated in Figure 2, a subsystem 11 that makes it possible to acquire 3D data, a subsystem 12 for processing the 3D data, a subsystem 13 for manufacturing a mould and a subsystem 14 for manufacturing the article using the mould.

The subsystem 11 for acquiring 3D data comprises for example one or more digital imaging devices or cameras which make it possible to generate one or more images of the region intended to receive the article.

In particular, especially in the case of a nail, the acquisition subsystem 11 takes three images of the nail and optionally of the phalanx on which it is found, especially images from the front, top and side. These images make it possible, by way of image processing, to extract a 3D data file from the shape of the nail. The image processing is for example carried out by a computer.

The subsystem 13 for manufacturing the mould is for example a stereolithography machine that receives 3D data about the object to be produced and produces the latter by *in situ* photopolymerization of a photopolymerizable material, by virtue of a laser that defines the shape to be produced layer by layer.

Stereolithography machines are offered by 3D Systems.

The subsystem 13 for manufacturing the mould may also be a 3D printer, a 3D printer with sufficient spatial resolution preferably being chosen so that reproduction of details having a size smaller than or equal to 50 µm is possible. 3D printing consists in depositing printed layers in succession so as to form a three-dimensional structure. 3D printers are available under the Stratasys, HP Designjet 3D or ProJet™ CPX 3000 (from 3D Systems) trade names.

The subsystem 14 for manufacturing the article using the mould may comprise a mechanism making it possible to apply a material in sheet form to the mould, to press this material in sheet form against the mould, extract the material in sheet form after it has been shaped and then cut it out.

The subsystem 14 may in particular comprise a device making it possible to heat the material in sheet form, in order to soften it, before it is applied against the mould.

The heating is carried out for example by passing the material in sheet form under a heater rail or by bringing it into contact with rollers or any other heated surface.

The material in sheet form is heated to a temperature high enough to cause it to soften and enable it to conform precisely to the shape of the mould.

The subsystem 13 may comprise, if required, means making it possible to press the material in sheet form against the mould, for example using a jet of gas or a liquid, or suction created under the material in sheet form.

The mould may be produced so as to aid the cutting out of the thermoformed sheet. For example, the mould may have small spikes which ensure that the thermoformed sheet is perforated between the article and the rest of the material in sheet form.

The mould may be treated so as to aid removal and/or cutting-out. For example, the mould is covered with a non-slip compound, a lubricant or particles or a thin layer of a soluble compound. In the latter case, it is possible to subsequently detach the article by immersing the whole in a solvent bath, which dissolves the soluble compound.

The method for shaping a material in sheet form provides a smooth external surface to the article.

When the material in sheet form is being placed in the mould, it is possible to treat the external surface of the material in sheet form in order to make it even smoother, for example by blowing, or in order to make it less smooth, for example by applying a counter-mould having a predefined surface finish.

The method according to the invention may provide, as explained above, an internal surface that is not smooth, which may aid bonding of the article to the region that is meant to receive it, especially bonding of a false nail to a nail.

The method according to the invention encompasses the possibility of modifying the 3D data obtained from the region to be treated, in particular the nail to be treated, so as to make changes to the article, for example so as to realize burrs, grooves and other textures intended to modify the adhesion of the internal surface of the article and/or signs, number or letters for example so as to aid identification by the user of the target region, especially the target nail.

The material in sheet form may be made of any thermoformable material, and in particular of one or more thermoplastic polymers. Optionally, the material in sheet form is a metal, a wax or a composite based on a woven or a non-woven. The material in sheet form may also be a glass or a ceramic. In the latter case, the mould may be used for manufacturing a preform which is then sintered. The mould may be lost.

The material in sheet form may be flexible or hard, porous or non-porous.

The material in sheet form may comprise, in addition to a thermoformable material, other compounds providing porosity, solubility, strength, heat- and/or solvent-activated softening or active compounds, antibacterial compounds, UV filters, this list being non-limiting. The material in sheet form may comprise fillers more particularly intended to increase strength, for example fibres.

The sheet material may be coloured or pigmented or have a physical colouring effect, for example by virtue of one or more interference layers.

The material in sheet form may be multicoloured or be patterned. In particular, the pattern may be produced so that applying the material in sheet form to the roundness of the mould gives it the final desired appearance. Thus, during production of the pattern the shape change of the material in sheet form on shaping is taken into account.

The material in sheet form may be multilayered and for example comprise, as illustrated in Figure 10, a layer 20 ensuring adhesion to the skin or nail, a layer 21 more particularly providing strength, and an external decorative layer 22 that for example has a patterned and/or coloured and/or shiny appearance.

In order to protect the false nail, the material in sheet form may be associated with a protective element.

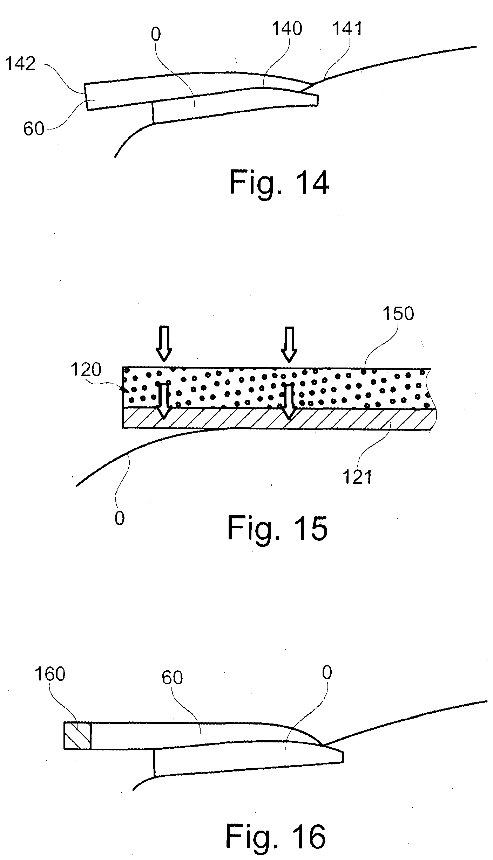

Figure 16 illustrates this embodiment. The false nail 60, deposited on the nail O, is provided at its end with a protective element 160 that makes it possible to dampen the impacts of the false nail 60 during contacts and to protect the natural nail O. The false nail 60 and/or the protective element 160 may be transparent in order to retain the gloss of the natural nail.

The protective element 160 may be produced from an impact-absorbing deformable material, for example an elastomer. The protective element 160 may be produced, for example from a material in sheet form that is made of two materials, during the manufacture of the false nail.

The internal surface of the material in sheet form intended to be in contact with the human keratinous materials may comprise an adhesive.

This surface may be covered with a removable protective sheet protecting the inner face of the article before the first use thereof, for example a silicone sheet.

The internal surface of the material in sheet form may also be coated with a water-soluble powder that protects the adhesive before use. The activation of the adhesive strength of the surface is then obtained by dissolving the powder using a drop of water before application to the human keratinous materials.

In one embodiment, the composition of the layer that is used for the adhesion, for example layer 20 in figure 10, comprises an agent capable of reacting with a keratin that has been previously modified, giving it adhesive properties. In a first preparation step, a substance is applied to the human keratinous materials, for example a natural nail, before they are brought into contact with the article. This substance may be in the form of a solution, a powder or a solid. It may be applied using a brush, or a spray, or else by dipping, or else by rubbing. It contains an agent capable of modifying the keratinous materials so as to give them an adhesive property. This agent may be a keratin softener or a reducing agent. For example, a thiol may be applied to the surface so as to reduce the keratin disulphides and reveal keratin thiols.

In a second step, layer 20 of the article is brought into contact with the previously modified keratinous materials, in order to attach the article. This attachment may be improved by using an agent that reacts with the receiving surface, for example containing a disulphide, in the composition of layer 20.

In order to facilitate the debonding of the article from human keratinous materials, the article may be brought, during the removal, into contact with an organic solvent, for example a carbon-based oil, capable of reducing the adhesive strength of the adhesive used to attach the article. The solvent may migrate through the article to reach the adhesive. For this purpose, the material in sheet form may be porous in order to enable this migration. This porosity may be, for example, in the form of internal channels, improving the contact between the solvent and the adhesive. This porosity may also develop with use of the article.

The material in sheet form may also exhibit a porosity which, in the new article, opens only onto the surface intended to be in contact with the human keratinous materials. Thus, the appearance of the external surface is preserved. When it is sought to remove the article, the porous region of the article may be exposed to the solvent owing to a mechanical action on the article, for example a separation of layers of the article, for example carried out transversely or longitudinally. This separation may be obtained by cutting, for example transversely through the article, especially using scissors or nail clippers.

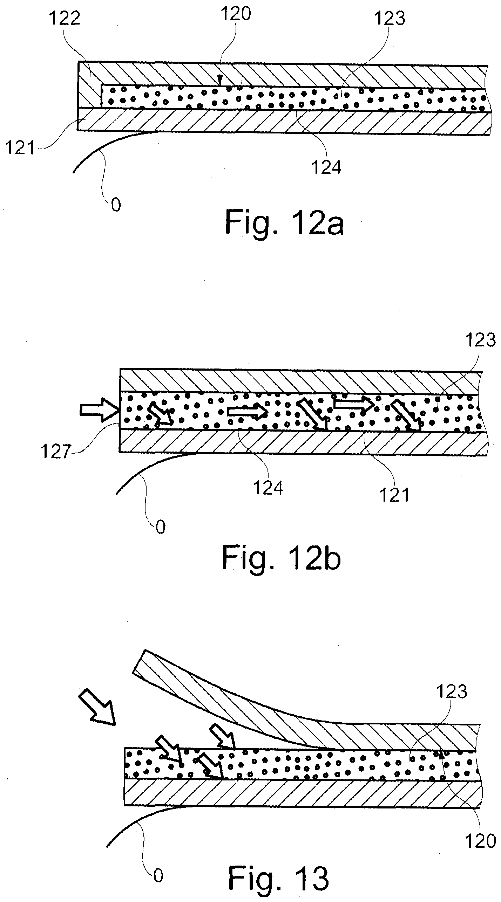

Figure 12-a illustrates this embodiment. The article 120 is bonded to keratinous materials, for example those of the nail O, by an adhesive 121. The article 120 is manufactured with a material in sheet form. It has a non-porous zone 122 and a porous zone 123 that is permeable to the solvent. This porous zone shares a contact surface 124 with the adhesive 121. The non-porous zone 122 is substantially impermeable to the solvent.

Figure 12-b illustrates the article after its end has been cut, for example transversely to the article, especially using scissors or nail clippers. This separation brings the porous zone 123 into contact with the outside via a surface 127. Thus, a percolating pathway indicated by the arrows is created between the surfaces 127 and 124. The solvent may then migrate more easily to the adhesive 121 and reduce its adhesion.

In another embodiment illustrated in figure 13, the access to the porous region 123 results from the debonding of a portion or all of a layer of the article 120. In other words, the separation of the layers makes it possible to create a percolating pathway indicated by the arrows in the figure.

In another embodiment illustrated by figure 15, the article 120 is constituted of a porous material in sheet form. The porosity opens onto the whole of its external surface 150. Bringing into contact with a solvent enables the migration of this solvent to the adhesive 121 and the debonding of the latter.

The material in sheet form may comprise an electric generator and a lighting device. The electric generator comprises an integrated battery or a photovoltaic sensor. The lighting device, for example of LED or OLED type, makes it possible to illuminate in one or more directions. Within the context of the use of the material in sheet form in a false nail, the lighting device makes it possible in particular to render the edge of the free end of the false nail visible and luminous.

The adhesive used to attach the article to human keratinous materials is for example selected from pressure-sensitive adhesives, also known as PSA adhesives, which are polymers having a low Tg, generally lying between 10°C and -80°C, which are capable of adhering on contact. More particularly, these adhesives may be acrylic, methacrylic, acrylate or methacrylate copolymers, polyurethanes or polyesters. Preferred PSA adhesives are those that can be dissolved in a simple solvent that may make contact with the human body - in particular water, ethanol, isododecane, acetone or alkyl acetates. For example, the solvent AQ 1350 produced by Eastman Chemicals is chosen. The adhesive may take the form of particles and in particular non-film-forming particles. Thus the adhesive has the advantage, during removal of the article after use, of remaining on the article side and not on the nail. For example, it is possible to use non-film-forming particles a few tens of microns in size, such as those sold by API under the name Geltac 600D.

The adhesive may also be a non-PSA compound that adheres when brought into contact with a third compound. This is the case for many polymers and in particular polymers having a Tg ranging from 0°C to 120°C. If a third compound such as a solvent capable of plasticizing the polymer is selected, the Tg of the material will drop and make it possible for the material to adhere. Thus it is possible to choose for example an acrylic copolymer, the Tg of which is about 80°C, sold by Chimex under the name Mexomer.

In a particular embodiment of the invention, the article is delivered covered in such a non-PSA adhesive and kept with a volatile solvent, the whole being packaged so that it is not possible for the solvent to evaporate. At the point of use, the solvent will begin to evaporate and thus the Tg will increase and the material will adhere.

In another particular embodiment of the invention, the material contains a solvent that can be absorbed by keratinous materials, for example acetone. Thus, as soon as the article is brought into contact with the nail some of the solvent will be absorbed, the Tg will increase, and the material will adhere.

It is also possible to use materials called "reactive adhesives". These materials adhere well via a reaction effect. They are however limited to use on occasions when the user would like the article to remain in place for a very long time. In this case, it is possible for example to use a cyanoacrylate material, such as for example ethyl cyanoacrylate.

The layer providing strength is for example made of one of the following materials: PET, PVC, polycarbonates, polyolefins such as for example polypropylene or high-density polyethylene, ABS, polyamides.

The decorative layer is for example a mixture of pigments or dyes, possibly being associated with solvents and binders (waxes, polymers).

The decorative layer may be covered with a protective layer that provides a shiny appearance and protection. This protective layer is preferably transparent. The protective layer may contain at least one wax or a polymer. This decorative layer may also be a film of a thermoplastic such as ABS or polystyrene.

The layers may be thin enough to generate interference effects, if required.

In the case where the article is used to cover a nail, the protective layer may cover relatively rigid materials such as thermoformable polymers, ceramics, glass or metals.

In one embodiment, the protective layer helps, with the material(s) that it covers, to create a specific sound quality. In particular, the properties of the protective layer may be chosen in combination with those of the material in sheet form so that the sound quality of the whole assembly in contact with an object from the surroundings is close to that of a natural nail.

The material in sheet form is for example from 0.1 to 2 mm in thickness, and more preferably from 0.2 to 0.7 mm in thickness before being shaped in the mould. After shaping, the thickness may remain substantially constant, but the material may have been stretched in places.

The strengthening layer is for example between 50 µm and 3 mm in thickness.

The decorative layer is for example between 1 and 200 µm in thickness, or even better between 1 and 50 µm in thickness.

The material in sheet form may have non-uniform mechanical properties before being placed onto the mould. For example, the thickness of the layer 21 providing strength increases towards one edge, as illustrated in Figure 11. To ensure that the material in sheet form retains a substantially constant thickness, the thickness of the decorative layer 22 may increase in the opposite direction. In the case of a false nail, the thickness of the layer providing strength increases in the direction of the nail end that extends beyond the nail. Thus the nail end is stronger, and the part that is applied to the nail more flexible.

The material in sheet form may have a variable thickness before it is placed on the mould. For example, the thickness may increase uniformly from one edge to the other.

In one embodiment, illustrated by figure 14, in order to produce a false nail 60 intended to be positioned on a natural nail O, the material in sheet form has a zone 140 which, in use, in contact with the cuticle 141 covering the nail, is much thinner than the free end 142. Thus, it is possible to retain a zone of substantially constant thickness, during growth, between the false nail and the cuticle.

When the material in sheet form is being or has been placed on the mould, it is possible to treat the visible surface of the material in sheet form to produce relief effects.

In a particular exemplary implementation of the invention, instead of a thermoformable material being used a coating comprising a curable compound and a volatile solvent is used, for example a material in sheet form which is soft because it is imbibed with a volatile solvent, and/or a crosslinkable material in solution or in sheet form. When a volatile solvent is present, the shaping is carried out while there is sufficient solvent to allow the material to conform to the mould.

Heating or the application of a vacuum are for example used to make the solvent evaporate. In the case of a crosslinkable material in solution or in sheet form, the shaping is carried out while the material is still in the uncrosslinked state.

The material in sheet form may be pressed against the mould by mechanical means, by pressure of a or by applying a vacuum fluid. The temperature necessary for the thermoforming is matched to the material.

The article may be treated in various ways after it has been moulded. In particular it is possible to apply a, for example adhesive, underlayer to at least some of the surface of the article, in particular the region opposite the nail, whether an additional protective layer, such as a removable non-stick film, is applied or not.

Another possible post-moulding treatment is the application of a non-stick underlayer, in particular to the region of the false nail that is not opposite the nail, or of an antibacterial, antifungal, coloured (in particular white) underlayer, especially to the region that is not opposite the nail.

It is also possible to apply an overlayer such as a coloured sheet, a print printed using an inkjet printer, a colour deposited with a brush or by spraying, a shiny layer based for example on a high-refractive-index material, for example a metal or a metal oxide, especially titanium oxide.

Mineral, organic or hybrid compounds may be employed within the material used to produce the article, which compounds, whether on heating or baking or under light or at room temperature, become stronger via a chemical reaction. This is for example the case for a crosslinkable or photocrosslinkable material, or a material that is able to undergo a reaction that makes it insoluble. The reactions may form interchain bridges via the addition of a crosslinking agent or via interchain reactions.

To do this, the article may be subjected to conditions that aid or enable this development.

It is thus possible to heat the article. In particular, it is possible to use a mineral or hybrid (mineral and organic) material and using heat modify it so as to make it stronger or change its colour. In particular, the material may be a mixture of crystals that are capable of forming a frit on baking, a frit being a state in which the crystals are partially fused to one another. This is the case for materials used in the ceramic.

The human keratinous materials, in particular the nails, on which the article is subsequently deposited, may be covered with a single-layer or multilayer coating. This coating may be produced, for example, using a varnish. In the case where the article is a transparent false nail, a varnish makes it possible to increase the gloss of the false nail, so that after placement, a gloss equivalent to that of the keratinous material of the nail, or an artificial gloss, is obtained. Furthermore, the false nail protects the varnish. The varnish may act as an adhesive, for attaching the article to the nail.

In one embodiment, the coating comprises an adhesive, preferably of PSA type. This adhesive may be deposited, for example, in the form of a solution or of an unwindable tape.

In another embodiment, an adhesive, preferably of PSA type, is deposited on the inner face of the article intended to be placed facing the keratinous materials. The adhesive may be in the form of a solution and may be deposited using an applicator, for example a brush, or be in the form of an adhesive tape adhesively bonded to the inner face. Optionally, this adhesive may be covered with a sheet that protects it before its first use, for example a silicone sheet. The adhesive may also be covered with a water-soluble powder which protects it before use. The activation of the adhesive strength is obtained by dissolving the powder using a drop of water before application to the human keratinous materials.

The adhesive may have a weaker shear strength than tensile strength. Thus it is possible to debond the article from the human keratinous materials by sliding it and to maintain a strong hold in daily use.

To facilitate the debonding of the article from the human keratinous materials, the properties of the adhesive may be chosen so that the adhesive loses a portion of its adhesive strength when it is subjected to a thermal shock, especially a cold shock, or to a vibration, for example a high-frequency vibration.

In one embodiment, the adhesive is a structural adhesive other than a PSA adhesive. In particular, this adhesive may be a hot-melt adhesive, and may see its adhesion decrease under the effect of an increase in the temperature, for example by liquefying.

In one embodiment, the adhesive contains, *inter alia,* a photosensitive agent, for example a photocrosslinkable agent. The adhesive is for example applied to the human keratinous materials before photocrosslinking. The article is then positioned on the adhesive. A light source, for example a UV source, is then placed so as to irradiate the adhesive and induce the crosslinking thereof.

So as to facilitate the debonding of the article from the human keratinous materials, a solvent that migrates through the article may be used, and the article may, for this purpose, be produced using a material in sheet form that is at least partially porous, as described previously.

In particular, the adhesive may be chosen in order to be able to be debonded in contact with a specific organic solvent, especially a carbon-based oil. The solvent may be volatile and temporarily suppress the effect of the adhesive, enabling a repositioning of the article on the human keratinous materials before the adhesion becomes effective again. In the case of a nail, this embodiment allows a repositioning of the article on the nail during the growth thereof.

### Shape of the mould

The shape of the surface of the mould does not necessarily correspond to that of the nail, as explained above.

In an exemplary implementation of the invention, part of the surface of the mould corresponds to the shape of the nail.

It is thus possible to produce a mould that is larger than the area of the nail. In this case, the mould has an area corresponding to the shape of the nail extended by an area called an extending area. In particular, the extending area is produced so as to follow the nail harmoniously.

It is possible for the mould to have a recess, so that it hides the thickness of the natural nail, the natural nail end being placed opposite the recess.

In another example, the area of the mould is smaller than the area of the nail.

If the nail is big, the 3D data recorded may be modified so that they correspond to a short nail.

The method may be used to produce patches. In this case, a flexible and/or thin material is used which is deposited on the mould.

It is possible to provide an article that extends beyond the natural size of the nail. Then, the length of the nail is cut (using a laser or pair of scissors for example) to the desired size.

Cutting guides may be used to help the user produce an attractive cut since it is known that a straight cut is not the most attractive. These guides may be dotted lines that are visible but that may be easily removed by rubbing or washing.

### Example

3D data were acquired by taking an image from the front, side, and from above each nail using a digital imaging device. In Solid Works, or Rhinoceros, or Autocad, the nail was outlined and the 3D digital file was obtained.

This file was processed in order to add a support to the five parts intended to mould the nails of a hand.

The file was then used in a 3D Systems stereolithography machine to manufacture the mould out of a photopolymerizable resin.

The stereolithography machine created a bulk item 40 equipped with suction holes 41, and in which the perimeter of each boss 44 (also called an imprint) corresponding to the shape of a nail is provided with a flat 43, as illustrated.

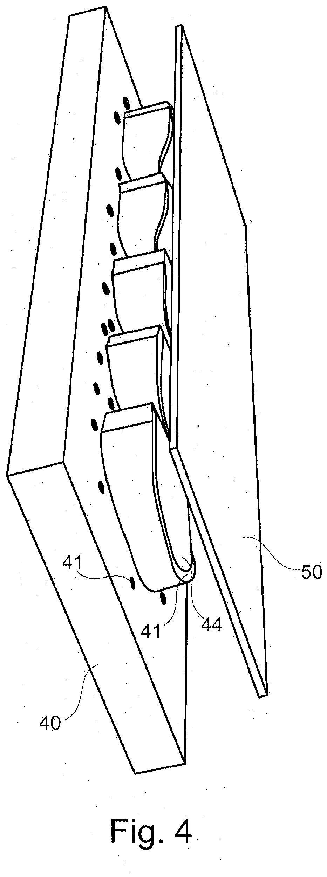

A sheet 50 of thermoplastic material was placed over this mould, as illustrated in Figure 4, the thermoplastic material being heated. This sheet was pressed against the mould.

The sheet 50 was for example a bilayer of PET coated with red PS, the bilayer being heated to 80°C.

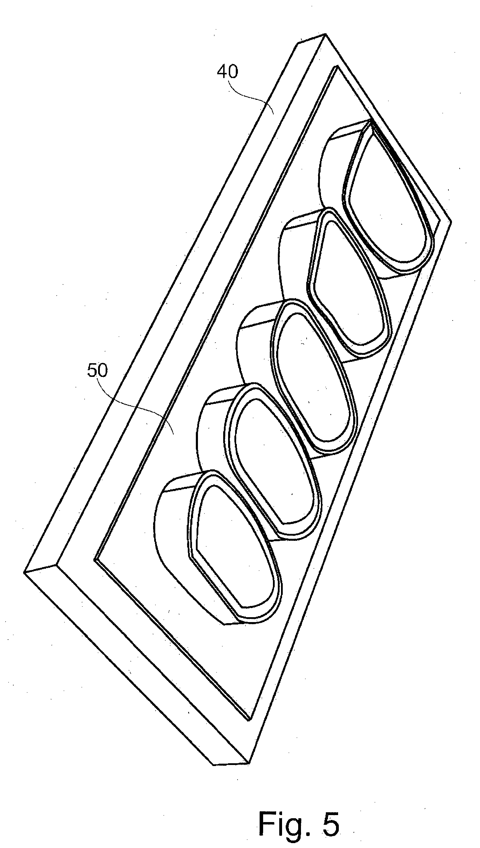

Suction was applied through the suction holes 41, thereby pressing the softened sheet 50 hard against the mould, as illustrated in Figure 5.

The height of the bosses and the thickness of the starting sheet defined the final thickness of the thermoformed false nail.

The surface finish of the mould was not transferred to the external surface of the thermoformed false nail.

The slight roughness of the surface of the mould was transferred to the internal face of the thermoformed false nail, thus increasing the bonding area, meaning that the item adhered well to the nail.

On demoulding, a form was obtained which could be decorated if desired, for example by pad printing or inkjet printing.

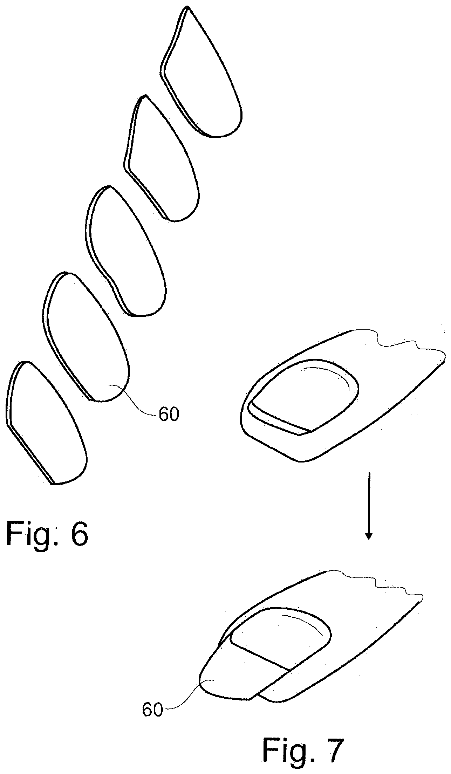

Next the thermoformed material was cut out, using a laser, along the flat 43 so as to obtain false nails 60 thermoformed to the exact shape of the consumer, decorated as desired and personalized, as illustrated in Figure 6. The false nails were bonded, as illustrated in Figure 7, to the nails using an adhesive based on AQ 1350 (Eastman Chemicals). It would also have been possible to use a "double sided" adhesive tape. This tape comprises a protective film that is removed during application.

An artificial inclination of the bosses, easily programmable, makes it possible to thin the distal part of the thermoformed false nail, if necessary.

Tests have shown that it is possible to thermoform a material in sheet form consisting of a film intended to produce patches for the nails, especially Nail Patch films from Sephora. It is thus possible to bond the material in sheet form before manufacturing the false nail.

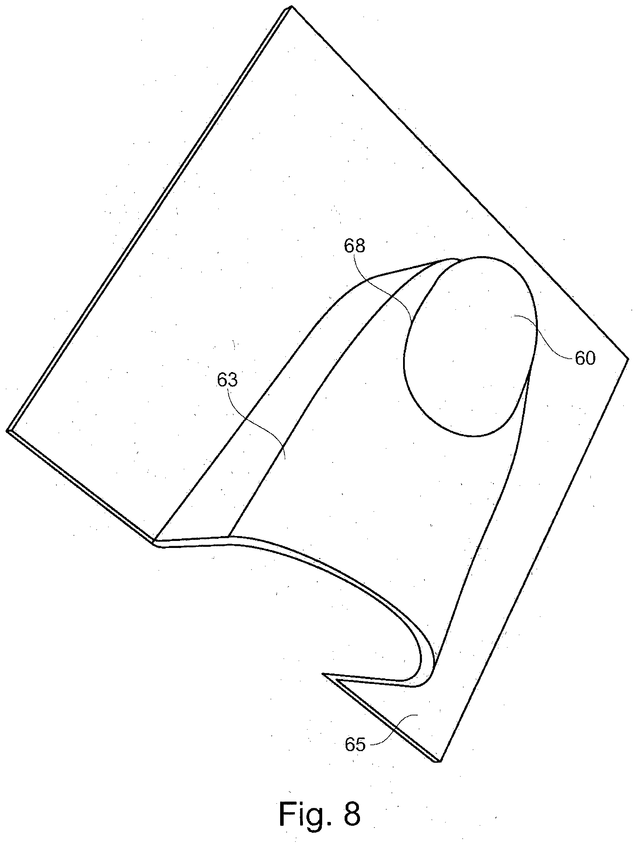

It may be seen in Figure 8 that it was possible to produce the article, in this case a false nail 60, with a positioning guide 63 which corresponds to the shape of the phalanx which bears the nail to which the false nail 60 is to be applied. This positioning guide was produced in the same way as the false nail 60 using 3D data corresponding to the contours of this phalanx, especially the top of the latter.

The positioning guide 63 was connected to a support.

The false nail 60 may be connected to the positioning guide 63 via preformed scoring 68, so that the user may position the false nail 60 by first of all introducing a finger into the positioning guide 63 in order to adjust the false nail to the position of the corresponding nail.

The user may fix the false nail, for example by applying pressure, an adhesive being present at the interface between the nail and the false nail, then detach the positioning guide 63 from the false nail by virtue of the preformed scoring 68.

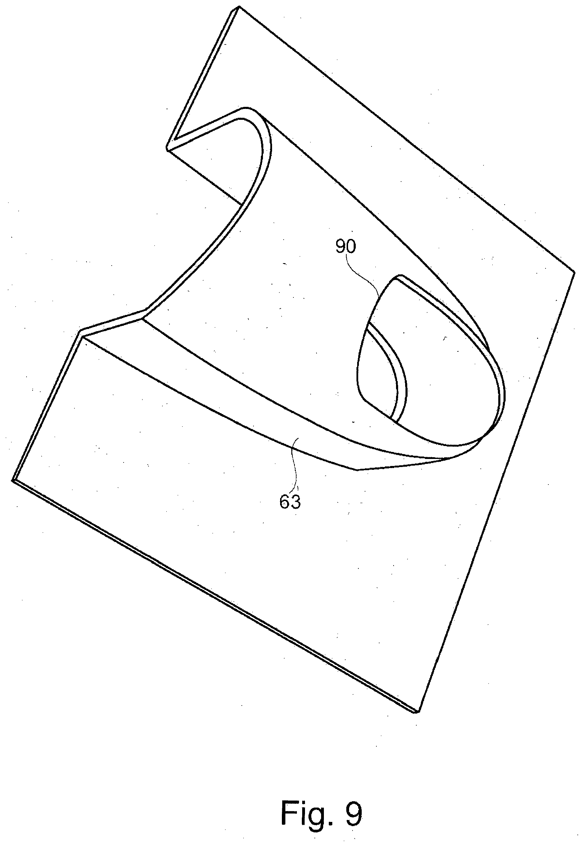

Figure 9 illustrates a variant embodiment in which the article forms a mask and has a window 90 the outline of which corresponds to that of the nail to be treated, the 3D data of which, and those of the phalanx that bears it, being acquired beforehand.

The article may be used by positioning the window 90 over the exact location of the nail.

Then, the user may apply a product, for example a varnish, to the nail, with the mask in place, without fear of applying the product to the skin around the nail, the skin being protected by the mask.

The user removes the article after an optional drying period.

The invention is not limited to the illustrated examples.

In particular, it is possible to combine the various variants with one another into other variants that have not been illustrated.

The expression "comprising a/an/one" is to be understood to be synonymous with "comprising at least a/an/one", unless the contrary has been specified.

## Claims

1. Method of manufacturing a false nail applied to the human body, comprising the following steps:
- digital acquisition of 3D contour data from the region on which the false nail needs to be applied;
- producing a mould using the 3D data and a numerical-control manufacturing machine;
- applying to the mould a coating intended to form the false nail such that the surface of the false nail intended to be fastened to a natural nail makes contact with the mould; and
- at least partially cutting out the coating to the format of the false nail.

2. Method according to Claim 1, the contours being acquired by way of at least two images of the region, taken at different angles, and preferably three images of the region.

3. Method according to either of Claims 1 and 2, the numerical-control machine used to produce the mould being a stereolithography machine or a 3D printer.

4. Method according to any one of Claims 1 to 3, the coating deposited in the mould being a coating in sheet form.

5. Method according to any one of Claims 1 to 4, the coating deposited on the mould having a variable thickness.

6. Method according to any one of Claims 1 to 4, the coating being deposited in the mould by spraying.

7. Method according to Claim 4, the material in sheet form being shaped by thermoforming.

8. Method according to either of Claims 4 and 7, the material in sheet form being multilayered.

9. Method according to any one of Claims 4, 7 and 8, the material in sheet form having non-uniform mechanical properties.

10. Method according to any one of Claims 4, 7, 8 or 9, the material in sheet form being porous to a solvent that makes it possible to reduce the adhesive strength of an adhesive used to attach the false nail to human keratinous materials.

11. Method according to any one of Claims 1 to 10, comprising a step during which the 3D data are processed to determine the shape to be given to the mould so as to obtain a false nail that extends beyond the region the contours of which have been acquired, and/or a false nail the shape of which has been modified relative to the acquired contours so as to produce a predefined effect.

12. Method according to any one of Claims 1 to 11, applied to the production of a false nail, the mould being produced with a part intended to form a nail end that extends beyond the finger, this part intended to form the nail end being computationally generated based on knowledge of the 3D contour data of the region on which the false nail will be applied.

13. Method according to any one of Claims 1 to 12, applied to the production of a false nail, a positioning guide (63) for positioning the false nail on the nail being produced on the false nail after the contours, not only of the nail itself but also of the phalanx bearing the nail, have been acquired.

14. Method according to Claim 13, the positioning guide serving as a barrier protecting the skin during application of a varnish to the false nail.

15. Method according to any one of the preceding claims, the coating being decorated by printing or metallization before it is applied to the mould.

## Patentansprüche

1. Verfahren zum Herstellen künstlicher Nägel, die am menschlichen Körper angebracht werden, das die folgenden Schritte umfasst:
- digitales Erfassen von 3D-Konturdaten von dem Bereich, an dem der künstliche Nagel angebracht werden soll;
- Anfertigen einer Form unter Verwendung der 3D-Daten und einer numerisch gesteuerten Fertigungsmaschine;
- Anbringen einer Beschichtung auf der Form, die dazu bestimmt ist, den künstlichen Nagel derart zu bilden, dass die Oberfläche des künstlichen Nagels, die bestimmt ist, an einem natürlichen Nagel befestigt zu werden, die Form kontaktiert; und
- mindestens teilweises Ausschneiden der Beschichtung auf das Format des künstlichen Nagels.

2. Verfahren nach Anspruch 1, wobei die Konturen in Form von mindestens zwei Bildern des Bereichs, die bei verschiedenen Winkeln aufgenommen wurden, und vorzugsweise drei Bildern des Bereichs erfasst werden.

3. Verfahren nach Anspruch 1 oder 2, wobei die numerisch gesteuerte Maschine, die verwendet wird, um die Form herzustellen, eine Stereolithographiemaschine oder ein 3D-Drucker ist.

4. Verfahren nach einem der Ansprüche 1 bis 3, wobei die Beschichtung, die in der Form abgelagert wird, eine Beschichtung in Folienform ist.

5. Verfahren nach einem der Ansprüche 1 bis 4, wobei die Beschichtung, die in der Form abgelagert wird, eine veränderliche Dicke besitzt.

6. Verfahren nach einem der Ansprüche 1 bis 4, wobei die Beschichtung in der Form durch Sprühen abgelagert wird.

7. Verfahren nach Anspruch 4, wobei das Material in Folienform durch Thermoformung geformt wird.

8. Verfahren nach einem der Ansprüche 4 und 7, wobei das Material in Folienform mehrschichtig ist.

9. Verfahren nach einem der Ansprüche 4, 7 und 8, wobei das Material in Folienform uneinheitliche mechanische Eigenschaften besitzt.

10. Verfahren nach einem der Ansprüche 4, 7, 8 oder 9, wobei das Material in Folienform für ein Lösungsmittel, das es ermöglicht, die Klebefestigkeit eines Klebstoffs, der verwendet wird, den künstlichen Nagel an menschlichem Keratinmaterial zu befestigen, zu verringern, durchlässig ist.

11. Verfahren nach einem der Ansprüche 1 bis 10, das einen Schritt umfasst, in dem die 3D-Daten verarbeitet werden, um die Gestalt zu bestimmen, die der Form gegeben werden muss, um einen künstlichen Nagel zu erhalten, der sich über den Bereich, dessen Konturen erfasst worden sind, hinaus erstreckt, und/oder einen künstlichen Nagel, dessen Gestalt in Bezug auf die erfassten Konturen verändert worden ist, um eine vordefinierte Wirkung zu erzeugen.

12. Verfahren nach einem der Ansprüche 1 bis 11, das zur Anfertigung eines künstlichen Nagels verwendet wird, wobei die Form mit einem Teil angefertigt wird, der dafür bestimmt ist, ein Nagelende zu bilden, das rechnerisch auf der Grundlage von Wissen über die 3D-Konturdaten des Bereichs, an dem der künstliche Nagel angebracht werden wird, erzeugt wird.

13. Verfahren nach einem der Ansprüche 1 bis 12, das zur Anfertigung eines künstlichen Nagels verwendet wird, wobei eine Positionierführung (63) zum Positionieren des künstlichen Nagels auf dem Nagel auf dem künstlichen Nagel hergestellt wird, nachdem die Konturen nicht nur des Nagels selbst, sondern auch der Phalanx, die den Nagel trägt, erfasst worden sind.

14. Verfahren nach Anspruch 13, wobei die Positionierführung als eine Sperre dient, die die Haut während des Auftragens eines Lacks auf den künstlichen Nagel schützt.

15. Verfahren nach einem der vorhergehenden Ansprüche, wobei die Beschichtung durch Drucken oder Metallisierung dekoriert wird, bevor sie an der Form angebracht wird.

## Revendications

1. Procédé de fabrication d'un faux ongle à appliquer au corps humain, comportant les étapes suivantes :
- acquisition numérique de données de contour 3D de la zone sur laquelle le faux ongle doit être posé,
- réalisation d'un moule à partir des données 3D et d'une machine de fabrication à commande numérique,
- application sur le moule d'un revêtement destiné à former le faux ongle de telle sorte que la surface du faux ongle devant être fixée sur un ongle naturel est en contact avec le moule ; et
- découpe au moins partielle du revêtement au format du faux ongle.

2. Procédé selon la revendication 1, les contours étant acquis à l'aide d'au moins deux images de la zone, prises sous des angles différents, et de préférence trois images de la zone.

3. Procédé selon l'une ou l'autre des revendications 1 et 2, la machine à commande numérique utilisée pour réaliser le moule étant une machine de stéréolithographie ou une imprimante 3D.

4. Procédé selon l'une quelconque des revendications 1 à 3, le revêtement déposé sur le moule étant un revêtement en feuille.

5. Procédé selon l'une quelconque des revendications 1 à 4, le revêtement étant déposé sur le moule ayant une épaisseur variable.

6. Procédé selon l'une quelconque des revendications 1 à 4, le revêtement étant déposé dans le moule par pulvérisation.

7. Procédé selon la revendication 4, la conformation du matériau en feuille s'effectuant par thermoformage.

8. Procédé selon l'une ou l'autre des revendications 4 et 7, le matériau en feuille étant multicouche.

9. Procédé selon l'une quelconque des revendications 4, 7 et 8, le matériau en feuille présentant des propriétés mécaniques inhomogènes.

10. Procédé selon l'une quelconque des revendications 4, 7, 8 ou 9, le matériau en feuille étant poreux à un solvant qui permet de réduire l'adhérence d'un adhésif utilisé pour attacher le faux ongle à des matières kératiniques humaines.

11. Procédé selon l'une quelconque des revendications 1 à 10, comprenant une étape pendant laquelle les données 3D sont traitées pour déterminer la forme à donner au moule de sorte à obtenir un faux ongle qui dépasse de la région dont les contours ont été acquis, et/ou un faux ongle dont la forme a été modifiée par rapport aux contours acquis de sorte à produire un effet prédéfini.

12. Procédé selon l'une quelconque des revendications 1 à 11, appliqué à la réalisation d'un faux ongle, le moule étant réalisé avec une partie destinée à la formation d'un bout d'ongle qui dépasse du doigt, cette partie destinée à la formation du bout d'ongle étant générée par calcul à partir de la connaissance des données de contour 3D de la zone sur laquelle va être posé le faux ongle.

13. Procédé selon l'une quelconque des revendications 1 à 12, appliqué à la réalisation d'un faux ongle, un guide de positionnement (63) pour positionner le faux ongle sur l'ongle étant réalisé sur le faux ongle après avoir fait l'acquisition des contours, non seulement de l'ongle lui-même mais également de la phalange portant l'ongle.

14. Procédé selon la revendication 13, le guide de positionnement servant de barrière protégeant la peau lors de l'application d'un vernis sur le faux ongle.

15. Procédé selon l'une quelconque des revendications précédentes, le revêtement étant décoré par impression ou métallisation avant son application sur le moule.
